# EUROPEAN PATENT SPECIFICATION

(11) **EP 3 809 095 B1**
(45) Date of publication and mention of the grant of the patent: **20.08.2025**
(21) Application number: 19819633.9
(22) Date of filing: 14.03.2019
(51) Int. Cl.: G01B 11/25

(54) **3D INFORMATION DETECTION DEVICE**
3D-INFORMATIONSDETEKTIONSVORRICHTUNG
DISPOSITIF DE DÉTECTION D'INFORMATIONS TRIDIMENSIONNELLES

(30) Priority: 15.06.2018 CN 201820937584 U
(43) Date of publication of application: 21.04.2021
(73) Proprietor: Hangzhou Hikrobot Co., Ltd., Hangzhou, Zhejiang 310051 (CN)
(72) Inventor: ZHANG, Hualin, Hangzhou, Zhejiang 310051 (CN); HE, Pinjiang, Hangzhou, Zhejiang 310051 (CN); LIU, Juan, Hangzhou, Zhejiang 310051 (CN); LIU, Jing, Hangzhou, Zhejiang 310051 (CN)
(74) Representative: Epping - Hermann - Fischer
(86) International application number: PCT/CN2019/078168
(87) International publication number: WO 2019/237782

(56) References cited:
- WO-A1-2013/017618
- CN-A- 101 825 445
- CN-A- 101 825 445
- CN-A- 102 829 736
- CN-U- 203 259 133
- CN-U- 205 448 962
- CN-U- 207 301 612
- CN-U- 208 579 746
- US-A1- 2013 321 592
- SUKHAN LEE ET AL: "A real-time 3D IR camera based on hierarchical orthogonal coding", 2006 IEEE INTERNATIONAL CONFERENCE ON ROBOTICS AND AUTOMATION (ICRA) : ORLANDO, FLORIDA, 15 - 19 MAY 2006, IEEE OPERATIONS CENTER, PISCATAWAY, NJ, 15 May 2006 (2006-05-15), pages 2035 - 2040, XP010921566, ISBN: 978-0-7803-9505-3, DOI: 10.1109/ROBOT.2006.1642004
- FRANKOWSKI G ET AL: "DLP/DSP-based optical 3D sensors for the mass market in industrial metrology and life sciences", EMERGING DIGITAL MICROMIRROR DEVICE BASED SYSTEMS AND APPLICATIONS III, SPIE, 1000 20TH ST. BELLINGHAM WA 98225-6705 USA, vol. 7932, no. 1, 10 February 2011 (2011-02-10), pages 1 - 11, XP060006640, DOI: 10.1117/12.876987

## Description

The present application claims the priority to a Chinese patent application No. 201820937584.9 filed with China National Intellectual Property Administration on June 15, 2018, and entitled "3D Information Detection Device".

### Technical Field

The present application relates to the technical field of acquiring 3D information about an object, and in particular to a 3D information detection device.

### Background

With the development of technology, the visual performance of machines is getting better and better. The image acquisition device of a machine is the core component of the machine, which determines the positioning accuracy of the machine. In the field of machine vision, ordinary image acquisition devices can only obtain two-dimensional information about objects, but cannot obtain 3D (3 Dimensions) information about objects, which obviously cannot meet actual requirements.

In order to obtain 3D information about objects, the current image acquisition device used to obtain 3D information about objects includes a projector and a camera, which are used to establish a structured light detection system and thus to obtain 3D information about objects. However, the projector and the camera included in the current image acquisition device are operated independently from each other and can only acquire two-dimensional images of objects. The acquired two-dimensional images need to be processed through a PC (personal computer), and only then the 3D information about objects can be obtained. In this way, the 3D information about objects can only be obtained with the cooperation of PCs, which leads to a problem that the 3D information about objects cannot be directly obtained.

A non-patent document (A real-time 3D IR camera based on hierarchical orthogonal coding, 2006 IEEE INTERNATIONAL CONFERENCE ON ROBOTICS AND AUTOMATION (ICRA) ,ORLANDO, FLORIDA, MAY 2006, pages 2035-2040) filed by SUKHAN LEE ET AL discloses a real-time 3D camera based on IR (infrared) structured light suitable for robots working in home environment. A 3D IR camera with variable structured light is developed to obtain a depth information of spatial object for home service robots. To alleviate the problems associated with visible light, it uses an infrared as light source. An infrared cannot be detected by human eyes and is robust to the illumination change in home environments.

CN203259133U discloses a dynamic three dimensional measuring time sequence synchronous system. The system comprises a time sequence control board, a DLP projector, a first CCD camera, a second CCD camera, an image acquisition card, and a data processor. The time sequence control board is respectively connected with the data processor, the first CCD camera, the second CCD camera, and the DLP projector. The DLP projector is connected with the data processor, and the first CCD camera and the second CCD camera are connected with the data processor by the image acquisition card.

CN101825445A discloses a three-dimension measuring system for a dynamic object, which comprises a clock synchronous controller, a digital light processing (DLP) projector, two charge coupled device (CCD) cameras, an image acquisition card and a computer, wherein a color wheel for generating colorful images is removed from the DLP projector, included angles between optical mandrels of the CCD cameras and the optical mandrel of the DLP projector are both between 20 and 60 degrees, and the relative positions of the DLP projector and the CCD cameras are unchanged during measurement; the computer is a graphic card with a calculation-based uniform equipment framework; and the clock synchronous controller is connected with the **DLP** projector and the CCD cameras respectively, the DLP projector is connected with the computer, and the CCD cameras are connected with the computer through the graphic card respectively.

WO 2013/017618 A1 and the non-patent document FRANKOWSKI G ET AL: "DLP/DSP-based optical 3D sensors for the mass market in industrial metrology and life sciences", EMERGING DIGITAL MICROMIRROR DEVICE BASED SYSTEMS AND APPLICATIONS III, SPIE, 1000, 20TH ST. BELLINGHAM WA 98225-6705 USA, vol. 7932, no. 1, 10 February 2011 (2011-02-10), pages 1-11, both describe DLP based optical 3D sensors whereby all elements are integrated in a common housing, with an intelligent camera with computing power.

### Summary

The present application provides a 3D information detection device to solve the problem that the 3D information about objects cannot be directly obtained in the current manner of obtaining 3D information about objects.

In order to solve the above problem, the present application provides a 3D information detection device as defined in independent claim 1. The dependent claims define preferred and/or advantageous examples of the invention.

In the 3D information detection device as defined by claim 1, the controller can control the operations of the DLP projector and the camera, enabling them to form an associated triggered unit. The camera can capture the structured light projected by the DLP projector in time and the captured images can be processed in time by the image processing module. In this detection process, since the image processing module directly performs 3D analysis and processing on the images acquired by the camera including the projection of the DLP projector to obtain 3D information about an object, the 3D information about the object can be directly obtained without the cooperation of a PC.

### Brief Description of the Drawings

The drawings described herein are used to provide a further understanding of the application and constitute a part of the application. The exemplary embodiments of the present application and the description thereof are used to explain the application, and do not constitute an improper limitation on the application. In the figures:
FIG. 1 is a schematic structural diagram of a 3D information detection device disclosed in an embodiment of the present application;
FIG. 2 is a schematic diagram of an off-axis lens disclosed in an embodiment of the present application;
FIG. 3 is a schematic diagram of an on-axis lens disclosed in an embodiment of the present application.

### Reference numbers:

100: DLP projector, 110: DLP driving device, 120: optical projector, 200: camera, 300: controller, 400: image processing module, 500: mounting base, 600: housing.

### Detailed Description of the Invention

For the clarity of the purpose, technical solutions, and advantages of the present application, the present application will be described clearly and completely in conjunction with the specific embodiments and the corresponding drawings of the present application. It is apparent that the described embodiments are only a part of the embodiments of the present application, rather than all of them. Other embodiments can be considered by those skilled in the art as long as they fall within the scope of protection defined in the appended claims.

The technical solutions provided in various embodiments of the present application will be described below in detail with reference to the accompanying drawings.

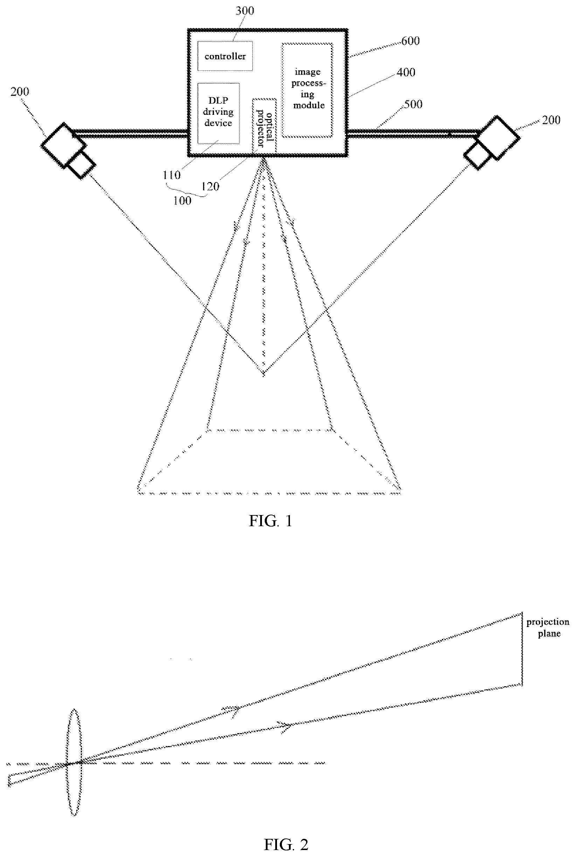

Please refers to FIG. 1, an embodiment of the present application discloses a 3D information detection device. The 3D information detection device of the present application includes a DLP projector 100, a camera 200, a controller 300 and an image processing module 400.

The DLP projector 100 is a projection device based on DLP (Digital Light Processing) technology, which can digitally process image signals and then project light. The DLP projector 100 is an encoding-enabled projector. The DLP projector 100 is configured to project structured light to an object (object under test), wherein the structured light can be encoded structured light. During the specific operation, the DLP projector 100 projects a series of encoded patterns, which are formed by structured light. The structured light technology is used to calculate 3D information about the object hereinafter, which can improve the detection accuracy.

The structured light can be analyzed through the structured light technology, which is an active triangulation technology. The basic principle is as follows. A light projecting device projects a controllable light spot, light strip or light plane to the surface of an object to form characteristic points, and then the structured light projected to the surface of the object is modulated by the height of the object. The modulated structured light is acquired as an image and is transmitted to an analysis device for analysis and calculation. Then, the 3D information about the object, that is, the three-dimensional data of the object can be obtained.

The camera 200 is configured for acquiring an image of the object to which the structured light has been projected. The image processing module 400 is connected to the camera 200 and configured for processing the image to obtain the 3D information about the object. As described above, the specific processing process and the calculation of the 3D information are common technology, and will not be repeatedly described here. Specifically, the image processing module 400 can be based on x86 system architecture, and uses a GPU to obtain an image from the camera 200 and applies a planar structured light algorithm on the image. In one specific implementation, the image processing module 400 can be, of course not limited to, a GPU (Graphics Processing Unit).

The controller 300 is connected to both the DLP projector 100 and the camera 200 and controls the operations of them.

In one implementation, the controller 300 can control the DLP projector 100 to operate first and then control the camera 200 to operate after a preset time. It can be understood that the preset time may be 1 second, 2 seconds, etc., which is not limited in the embodiments of the present application. In this case, each time the DLP projector 100 projects one sheet, the camera 200 takes one shot after the preset time, and the image processing module 400 can process the picture taken by the camera 200 and then calculate the 3D information about the object.

In another implementation, the controller 300 can control the DLP projector 100 and the camera 200 to operate synchronously. In this case, each time the DLP projector 100 projects one sheet, the camera 200 takes one shot at the same time, and the image processing module 400 can process the picture taken by the camera 200 in real time and then calculate the 3D information about the object. In an optional solution, the controller 300 can be act as a synchronization controller that is able to control the synchronization of the DLP projector 100 and the camera 200. The controller 300 can be controlled by software or by a hardware circuit. In this technical field, the simultaneous operation of two devices can be controlled in many ways, which are not listed here. Specifically, the controller 300 can be a FPGA (Field Programmable Gate Array) chip.

In the 3D information detection device disclosed in the embodiments of the present application, the controller 300 can control the DLP projector 100 and the camera 200 to operate synchronously, enabling them to form an associated triggered unit. The camera 200 can capture the structured light projected by the DLP projector 100 in time, and the captured image can be processed by the image processing module 400 in time. In this detection process, since the image processing module directly performs 3D analysis and processing on the image acquired by the camera including the projection of the DLP projector to obtain 3D information about the object, the 3D information about the object can be directly obtained without the cooperation of a PC.

Further, in the embodiment of the present application, the DLP projector 100, the camera 200 and the image processing module 400 are integrated as one unit, such that the 3D information about the object can be directly provided to users through a 3D algorithm, which greatly facilitates the usage of users, and does not require users to perform any further processing later.

In the detection device disclosed in the embodiment of the present application, the DLP projector 100 projects a series of encoded patterns (formed by structured light) to an object using the DLP projecting technology. The camera 200 then acquires the image of the object the surface of which was projected with the patterns. Finally, the image processing module 400 applies a decoding algorithm on the image taken by the camera 200 and then the depth information about the surface of the object can be accurately restored. In addition, the camera 200 itself can acquire the two dimensional information about the acquired image, and finally the 3D information about the object is calculated using the structured light technology. The 3D information detection device disclosed in the embodiment of the present application can be widely used in the fields of robot positioning, 3D scanning, 3D measurement and the like.

Using the DLP projecting technology, different patterns can be encoded flexibly, and then planar structured light can be projected with higher precision. The DLP projector 100 can encode structured light in a Gray-code encoding format or a sine encoding format. The specific implementation of encoding structured light by using the Gray-code encoding format or the sine encoding format is known to those skilled in the art, and will not be repeatedly described here.

The DLP projector 100 includes a DLP driving device 110 and an optical projector 120. The DLP driving device 110 is connected to the optical projector 120 and drives the optical projector 120 to project encoded structured light to an object. The DLP driving device 110 is connected to the controller 300, which can be integrated on the DLP driving device. In this way, it is possible to save space and it is convenient for the controller to control the synchronization of the camera 200 and the DLP driving device 100. The controller 300 can control the DLP driving device 110 and thus the projection of the optical projector 120. The optical projector 120 includes a projection lens, which can be a 12mm or 8 mm lens. Specifically, the projection lens can focus at a working distance of 500mm, 1000mm, etc. Of course, the focusing distance is not limited to the above-mentioned distance. The optical projector 120 can use a DMD (Digital Micromirror Device) chip produced by TI (Texas Instruments) to carry out the DLP projection.

The optical projector 120 can include a LED light source with three colors of red, green and blue, which enables the DLP light source to project structured lights of different colors. In this case, the DLP projector 100 can provide patterns of different colors according to different scenes.

In a specific implementation, the DLP driving device 110 can include a FPGA module, which controls the generation of the Gray-code encoded patterns. The generated encoded patterns are stored in the memory, and then projected by the optical projector 120.

In the camera 200 disclosed in the embodiment of the present application, the camera 200 includes a camera body and a camera lens. The camera 200 can be a camera using an image sensor of 1.3 million pixels, or 3 million pixels, or other number of pixels. The image sensor can be a high-speed area array CCD (Charge-coupled Device) image sensor or a CMOS (Complementary Metal Oxide Semiconductor) image sensor, of course, to which the present application is not limited. In addition, the camera lens can be equipped with a standard FA (Factory Automation) lens. The focal length of the standard FA lens can be 8mm or 12mm, of course, to which the present application is not limited.

The DLP projector 100 includes a housing 600, within which the controller 300, the DLP driving device 110, the optical projector 120 and the image processing module 400 are all arranged, to facilitate the on-site mounting of the above-mentioned components. The housing 600 is a metal housing, which is able to play a better role in heat dissipation, and thus can dissipate the heat generated by the components arranged in the housing in time.

The 3D information detection device disclosed in the embodiment of the present application can further include a mounting base 500. The camera 200 and the DLP projector 100 can be both arranged on the mounting base 500, and the camera 200 is located on one side of the DLP projector 100, that is to say, the camera 200 can be located on either side of the DLP projector 100. During the specific mounting, the mounting base 500 can be fixed on the detection site firstly, and then provide mounting positions for the DLP projector 100 and the camera 200. Of course, it is possible to mount the DLP projector 100 and the camera 200 on the mounting base 500 firstly and mount the formed assembly on site at last.

In an optional solution, the camera 200 is movably arranged on the mounting base 500, and is movable in a direction close to or away from the DLP projector 100, so that the position of the camera 200 can be adjusted to achieve the purpose of adjusting the shooting position.

As described above, the camera 200 can include a camera body and a camera lens. The camera body can be connected to the mounting base 500, and is movably engaged with the mounting base 500. The camera lens is rotatably engaged with the camera body and thus the shooting angle of the camera 200 can be adjusted flexibly.

In the 3D information detection device disclosed in the embodiment of the present application, there can be two cameras 200. The two cameras 200 can be symmetrically arranged on two sides of the DLP projector 100. The use of two cameras 200 can better remedy the blind area existing in the field of one camera 200, thereby improving the detection accuracy. Of course, when there is one camera 200, the 3D information about an object can also be detected.

When there are two cameras 200, the distance between the two cameras 200 can be referred to as a baseline distance. According to the triangulation principle, the greater the baseline distance, the higher the depth resolution that will be obtained during shooting. The above-mentioned cameras 200 are movably arranged on the mounting base 500, and thus the baseline distance between the two cameras 200 can be adjusted more flexibly to achieve the effect of flexibly adjusting the depth resolution. Users can flexibly adjust the baseline distance between the two cameras 200 according to the operating environment.

In order to improve the detection effect, in an optional solution, the end face of the projection lens of the DLP projector 100 and the end faces of the camera lenses of the two cameras 200 can be located in the same straight line. The projection lens is located in the middle between the camera lenses of the two cameras 200, that is to say, the camera lenses of the two cameras 200 are symmetrically arranged on two sides of the projection lens.

In a specific implementation, the angle between the optical axis of the camera lens of the camera 200 and the optical axis of the projection lens of the DLP projector 100 can range from 5° to 45°. Of course, the above-mentioned structure of the camera 200 is able to realize the adjustment of the shooting direction of the camera lens, and can adjust the angle between the optical axis of the camera lens of the camera 200 and the optical axis of the projection lens of the DLP projector 100 more flexibly.

Since the camera lens of the camera 200 can rotate, the 3D scanning can be performed by the 3D information detection device within a large range, and the detection range can thus be broadened.

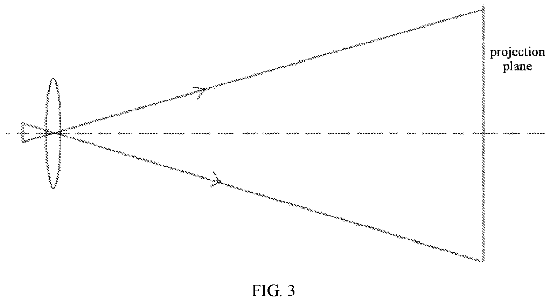

In the embodiment of the present application, the projection lens of the DLP projector 100 can use an off-axis lens. As shown in FIG. 2, the projection plane formed by the off-axis lens is located on one side of its optical axis. The use of an off-axis lens can satisfy the compatibility between the edge position of a projected image and the mounting position of the DLP projector 100. However, since the projected image is not on the main axis of the projection lens, the distortion of the projection lens will increase and the image quality will decrease. Based on this, the projection lens of the DLP projector 100 is an on-axis lens. As
shown in FIG. 3, in this case, the projection plane formed by the on-axis lens is symmetrical with respect to the optical axis of the on-axis lens. The on-axis lens can improve the quality of the projected image, and ultimately improve the detection accuracy of the detection device to obtain more accurate 3D information about an object.

The above description of the embodiments of the present application focus on the differences between various embodiments. Different optimization features between the various embodiments can be combined to form a better embodiment, as long as there is no conflict between them and as long as said embodiment remains within the scope of protection defined by the appended claims. For the conciseness of the text, it is not repeatedly described here. What is described above is only some embodiments of the present application and is not intended to limit the present application. Various modifications and changes can be made by those skilled in the art in the present application.

## Claims

1. A 3D information detection device, comprising a digital light processing, DLP, projector (100), a camera (200), a controller (300) and an image processing module (400), wherein the DLP projector (100) is configured for projecting structured light to an object, the camera (200) is configured for acquiring an image of the object to which the structured light has been projected, the image processing module (400) is connected to the camera (200) and configured for processing the image to obtain 3D information about the object, and the controller (300) is connected to both the DLP projector (100) and the camera (200) and controls operations of the DLP projector and the camera,
wherein the DLP projector (100) comprises a DLP driving device (110) and an optical projector (120), the DLP driving device (110) is connected to the optical projector (120) and drives the optical projector (120) to project encoded structured light to the object, and the DLP driving device (110) is connected to the controller (300),
**characterized in that** the DLP projector (100) further comprises a metal housing (600), within which the controller (300), the DLP driving device (110), the optical projector (120) and the image processing module (400) are all arranged, wherein the camera (200) is provided outside the housing (600);
and **in that** a projection lens of the DLP projector (100) is an on-axis lens.

2. The 3D information detection device according to claim 1, wherein the controller (300) is integrated on the DLP driving device (110).

3. The 3D information detection device according to claim 1, further comprising a mounting base (500), wherein the camera (200) and the DLP projector (100) are both arranged on the mounting base (500), and the camera (200) is located on one side of the DLP projector (100).

4. The 3D information detection device according to claim 3, wherein the camera (200) is movably arranged on the mounting base (500) and is movable in a direction close to or away from the DLP projector (100).

5. The 3D information detection device according to claim 4, wherein the camera (200) comprises a camera body and a camera lens, the camera body is movably engaged with the mounting base (500), and the camera lens is rotatably engaged with the camera body.

6. The 3D information detection device according to claim 5, wherein an angle between an optical axis of the camera lens of the camera (200) and an optical axis of a projection lens of the DLP projector (100) ranges from 5° to 45°.

7. The 3D information detection device according to any one of claims 3 to 6, wherein there are two cameras (200), and the two cameras (200) are symmetrically arranged on two sides of the DLP projector (100).

8. The 3D information detection device according to claim 1, wherein the image processing module (400) is a Graphics Processing Unit, GPU.

## Patentansprüche

1. 3D-Informationsdetektionsvorrichtung, aufweisend einen digitalen Lichtverarbeitungs-, DLP-, Projektor (100), eine Kamera (200), eine Steuerung (300) und ein Bildverarbeitungsmodul (400), wobei der DLP-Projektor (100) dafür ausgelegt ist, strukturiertes Licht auf einen Gegenstand zu projizieren, die Kamera (200) dafür ausgelegt ist, ein Bild des Gegenstands zu erfassen, auf den das strukturierte Licht projiziert wurde, das Bildverarbeitungsmodul (400) mit der Kamera (200) verbunden und dafür ausgelegt ist, das Bild zu verarbeiten, um 3D-Informationen über den Gegenstand zu beschaffen, und die Steuerung (300) sowohl mit dem DLP-Projektor (100) als auch mit der Kamera (200) verbunden ist und Betriebsabläufe des DLP-Projektors und der Kamera steuert,
wobei der DLP-Projektor (100) eine DLP-Antriebsvorrichtung (110) und einen optischen Projektor (120) aufweist, die DLP-Antriebsvorrichtung (110) mit dem optischen Projektor (120) verbunden ist und den optischen Projektor (120) antreibt, um codiertes strukturiertes Licht auf den Gegenstand zu projizieren, und die DLP-Antriebsvorrichtung (110) mit der Steuerung (300) verbunden ist,
**dadurch gekennzeichnet, dass**
der DLP-Projektor (100) darüber hinaus ein Metallgehäuse (600) aufweist, in dem die Steuerung (300), die DLP-Antriebsvorrichtung (110), der optische Projektor (120) und das Bildverarbeitungsmodul (400) angeordnet sind, wobei die Kamera (200) außerhalb des Gehäuses (600) vorgesehen ist;
und dass
eine Projektionslinse des DLP-Projektors (100) eine auf Achse liegende Linse ist.

2. 3D-Informationsdetektionsvorrichtung nach Anspruch 1, wobei die Steuerung (300) an der DLP-Antriebsvorrichtung (110) integriert ist.

3. 3D-Informationsdetektionsvorrichtung nach Anspruch 1, darüber hinaus eine Montagebasis (500) aufweisend, wobei die Kamera (200) und der DLP-Projektor (100) beide auf der Montagebasis (500) angeordnet sind und die Kamera (200) sich auf einer Seite des DLP-Projektors (100) befindet.

4. 3D-Informationsdetektionsvorrichtung nach Anspruch 3, wobei die Kamera (200) an der Montagebasis (500) bewegbar angeordnet ist und in einer Richtung bis nahe zum DLP-Projektor (100) oder von diesem weg bewegbar ist.

5. 3D-Informationsdetektionsvorrichtung nach Anspruch 4, wobei die Kamera (200) einen Kamerakörper und eine Kameralinse aufweist, der Kamerakörper bewegbar mit der Montagebasis (500) in Eingriff ist und die Kameralinse drehbar mit dem Kamerakörper in Eingriff ist.

6. 3D-Informationsdetektionsvorrichtung nach Anspruch 5, wobei ein Winkel zwischen einer optischen Achse der Kameralinse der Kamera (200) und einer optischen Achse einer Projektionslinse des DLP-Projektors (100) im Bereich von 5° bis 45° liegt.

7. 3D-Informationsdetektionsvorrichtung nach einem der Ansprüche 3 bis 6, wobei zwei Kameras (200) vorhanden sind und die zwei Kameras (200) symmetrisch auf zwei Seiten des DLP-Projektors (100) angeordnet sind.

8. 3D-Informationsdetektionsvorrichtung nach Anspruch 1, wobei das Bildverarbeitungsmodul (400) eine Grafikverarbeitungseinheit, GPU, ist.

## Revendications

1. Dispositif de détection d'informations tridimensionnelles, comprenant un projecteur numérique à traitement de lumière, DLP, (100), une caméra (200), une unité de commande (300) et un module de traitement d'images (400), le projecteur DLP (100) étant conçu pour projeter une lumière structurée sur un objet, la caméra (200) étant conçue pour enregistrer une image de l'objet sur lequel la lumière structurée a été projetée, le module de traitement d'images (400) étant connecté à la caméra (200) et étant conçu pour traiter l'image afin d'obtenir des informations tridimensionnelles sur l'objet, et l'unité de commande (300) étant connectée à la fois au projecteur DLP (100) et à la caméra (200) et commande les opérations du projecteur DLP et de la caméra,
sachant que le projecteur DLP (100) comprend un dispositif d'entraînement DLP (110) et un projecteur optique (120), le dispositif d'entraînement DLP (110) est connecté au projecteur optique (120) et actionne le projecteur optique (120) afin de projeter une lumière structurée codée sur l'objet, et le dispositif d'entraînement DLP (110) est connecté à la unité de commande (300),
**caractérisé en ce que**
le projecteur DLP (100) comprend en outre un boîtier métallique (600) dans lequel sont disposés l'unité de commande (300), le dispositif d'entraînement DLP (110), le projecteur optique (120) et le module de traitement d'images (400), la caméra (200) étant prévue à l'extérieur du boîtier (600) ;
et **en ce qu'**
une lentille de projection du projecteur DLP (100) est une lentille située sur l'axe.

2. Le dispositif de détection d'informations tridimensionnelles selon la revendication 1, sachant que l'unité de commande (300) est intégrée au dispositif d'entraînement DLP (110).

3. Le dispositif de détection d'informations tridimensionnelles selon la revendication 1, comprenant en outre une base de montage (500), la caméra (200) et le projecteur DLP (100) étant tous deux disposés sur la base de montage (500) et la caméra (200) étant située sur un côté du projecteur DLP (100).

4. Le dispositif de détection d'informations tridimensionnelles selon la revendication 3, sachant que la caméra (200) est disposée de manière mobile sur la base de montage (500) et peut être déplacée dans une direction jusqu'à proximité du projecteur DLP (100) ou à l'écart de celui-ci.

5. Le dispositif de détection d'informations tridimensionnelles selon la revendication 4, sachant que la caméra (200) comprend un corps de caméra et une lentille de caméra, le corps de caméra est en prise de manière mobile avec la base de montage (500) et la lentille de caméra est en prise de manière rotative avec le corps de caméra.

6. Le dispositif de détection d'informations tridimensionnelles selon la revendication 5, sachant qu'un angle entre un axe optique de la lentille de caméra de la caméra (200) et un axe optique d'une lentille de projection du projecteur DLP (100) est compris entre 5° et 45°.

7. Le dispositif de détection d'informations tridimensionnelles selon l'une des revendications 3 à 6, sachant que deux caméras (200) sont présentes et les deux caméras (200) sont disposées symétriquement sur deux côtés du projecteur DLP (100).

8. Le dispositif de détection d'informations tridimensionnelles selon la revendication 1, sachant que le module de traitement d'images (400) est une unité de traitement graphique, GPU.
